# EUROPEAN PATENT APPLICATION

(11) **EP 4 647 905 A1**
(43) Date of publication of application: **12.11.2025**
(21) Application number: 24813790.3
(22) Date of filing: 07.03.2024
(51) Int. Cl.: G06F 9/451

(54) **APPLICATION COMPONENT DISPLAY METHOD AND APPARATUS, AND ELECTRONIC DEVICE**

(30) Priority: 26.05.2023 CN 202310615577
(71) Applicant: Huawei Technologies Co., Ltd., Shenzhen, Guangdong 518129 (CN)
(72) Inventor: WANG, Xin, Shenzhen, Guangdong 518129 (CN); XUE, Yulong, Shenzhen, Guangdong 518129 (CN)
(74) Representative: Goddar, Heinz J.
(86) International application number: PCT/CN2024/080571
(87) International publication number: WO 2024/244584

(57) **Abstract**

This application provides a method and an apparatus for displaying an application component, and an electronic device, and relates to the field of terminal technologies. The method includes: obtaining first data from a persistent storage area in response to a first operation, where the first operation is used to trigger displaying of a first application component, and the first data includes at least a part of data corresponding to the first application component; and displaying the first application component based on the first data. In the technical solution provided in this application, the first data is directly obtained from the persistent storage area, and there is no need to wait for a target application to provide the first data. Therefore, efficiency of obtaining the first data is increased, efficiency of displaying the first application component is increased, dependency on the target application for displaying of the first application component is reduced, reliability of displaying the first application component is improved, and a problem that a user sees a blank first application component or the first application component cannot be displayed is resolved.

## Description

This application claims priority to Chinese Patent Application No. 2023106155772, filed with the China National Intellectual Property Administration on May 26, 2023 and entitled "METHOD AND APPARATUS FOR DISPLAYING APPLICATION COMPONENT, AND ELECTRONIC DEVICE", which is incorporated herein by reference in its entirety.

### TECHNICAL FIELD

This application relates to the field of terminal technologies, and in particular, to a method and an apparatus for displaying an application component, and an electronic device.

### BACKGROUND

Various applications may be installed on an electronic device, and different applications may provide different services. The electronic device may display an application component on a home screen. The application component is an interface display form, and may be used to carry related information of or a related operation on a target application, so that a service can be directly accessed and an experience level can be reduced.

Currently, the target application may be started, data corresponding to the application component is obtained from the target application, and then the application component is displayed based on the obtained data. However, such an operation of displaying the application component is very complex, and greatly depends on the target application. As a result, efficiency and reliability of displaying the application component are low.

### SUMMARY

In view of this, this application provides a method and an apparatus for displaying an application component, and an electronic device, to improve efficiency and reliability of displaying an application component.

To achieve the foregoing objective, according to a first aspect, an embodiment of this application provides a method for displaying an application component, including: obtaining first data from a persistent storage area in response to a first operation, where the first operation is used to trigger displaying of a first application component, and the first data includes at least a part of data corresponding to the first application component; and displaying the first application component based on the first data.

In embodiments of this application, because the first operation may trigger displaying of the first application component, the first data is obtained from the persistent storage area in response to the first operation, where the first data includes the at least a part of data corresponding to the first application component, so that the first application component may be displayed based on the first data. The first data is directly obtained from the persistent storage area, and there is no need to wait for a target application to provide the first data. Therefore, efficiency of obtaining the first data is increased, efficiency of displaying the first application component is increased, dependency on the target application for displaying of the first application component is reduced, reliability of displaying the first application component is improved, and a problem that a user sees a blank first application component or the first application component cannot be displayed is resolved.

In some implementations, duration of waiting for the target application to provide the first data includes duration of communication between a host application and the target application to obtain the first data. In some implementations, the duration of waiting for the target application to provide the first data may further include duration of starting the target application.

In some implementations, the application component may include a service card (referred to as a card for short) or a widget (or referred to as a small component). It may be understood that, during actual application, the application component may include more or fewer software modules or units that can carry related information of or related operations on the target application, or the application component may have another name, for example, a magnetic sticker or a business card.

In some implementations, the method further includes: obtaining second data from a target application corresponding to the first application component, where the second data includes at least a part of data corresponding to the first application component; and updating the displayed first application component based on the second data.

A sequence relationship between an occasion for obtaining the first data from the persistent storage area and an occasion for obtaining the second data from the target application corresponding to the first application component may not be limited, and a sequence relationship between an occasion for obtaining the first data and an occasion for obtaining the second data is not limited either, therefore, regardless of whether the first data or the second data is first obtained, the first application component is first displayed based on the first data, and then the displayed first application component is updated based on the second data. The following describes three possible cases. Case 1: The first data is first obtained, that is, the first application component may be displayed based on the first data, and when the second data is obtained again, the displayed first application component is updated based on the second data. Case 2: When both the first data and the second data are obtained simultaneously, the application component is still displayed based on the first data, and then the displayed first application component is updated based on the second data. Case 3: The second data is first obtained, and in this case, the first application component may still not be displayed. Instead, when the first data is obtained, the first application component is first displayed based on the first data, and then the displayed first application component is updated based on the second data. It can be learned that, in the foregoing three cases, the first application component may be first displayed, and then the displayed first application component is updated, so that a manner of displaying the application component is neater and more consistent, and more consistent visual experience is brought to a user.

It should be noted that the obtaining the second data from the target application of the first application component may include directly obtaining the second data from the target application, or may include indirectly obtaining the second data from the target application.

In some implementations, the second data of the target application may be obtained by using middleware such as an application component management service. In some implementations, the host application may request the middleware such as the application component management service to send the second data to the host application at an interval of third duration. The third duration may be preset duration. In some implementations, when being switched to a foreground, the host application may send a first notification to the middleware such as the application component management service, where the first notification indicates that the host application is currently in the foreground and/or the first application component is visible, and the middleware such as the application component management service sends the second data to the host application in response to the first notification. When being switched to a background, the host application may send a second notification to the middleware such as the application component management service, where the second notification indicates that the host application is currently in the background and/or the first application component is invisible, and the middleware such as the application component management service stops sending the second data to the host application in response to the second notification.

For example, at a moment t1, the host application is switched to the background and sends the second notification to the application component management service, and at a moment t2, the host application is switched to the foreground and sends the first notification to the application component management service. If the application component management service receives, at a moment t3 between t1 and t2, the second data sent by the target application, the application component management service may store the second data, and send the second data to the host application after receiving the first notification at the moment t2. If the application component management service receives, at a moment t4 before the moment t1 or a moment t5 after the moment t2, the second data sent by the target application, the application component management service immediately sends the second data to the host application.

In some implementations, the host application may directly communicate with the target application, to directly obtain the second data from the target application.

In some implementations, the method further includes: in response to the first operation, obtaining second data from a target application corresponding to the first application component, where the second data includes at least a part of data corresponding to the first application component; and if a moment at which the first data is obtained is earlier than a moment at which the second data is obtained, displaying the first application component based on the first data; and updating the displayed first application component based on the second data.

In some implementations, if a moment at which the first data is obtained is equal to or later than a moment at which the second data is obtained, the first application component is displayed based on the second data.

In response to the first operation, the first data is obtained from the persistent storage area, and the second data may also be obtained from the target application corresponding to the first application component. If the moment at which the first data is obtained is earlier than the moment at which the second data is obtained, the first application component may be first displayed based on the first data, then the second data continues to be obtained from the target application. In this way, the displayed first application component is updated based on the second data, so that the displayed first application component may include richer details or newer information. This ensures quality and accuracy of the first application component. If the moment at which the first data is obtained is equal to or later than the moment at which the second data is obtained, the first application component may be directly displayed based on the second data. In other words, efficiency of displaying the first application component that includes richer details or newer information can be increased, and user experience is further improved.

In some implementations, after displaying the first application component based on the first data, the method further includes: obtaining second data from a target application corresponding to the first application component, where the second data includes at least a part of data corresponding to the first application component; and updating the displayed first application component based on the second data.

Because the first operation may trigger displaying of the first application component, the first data may be obtained from the persistent storage area in response to the first operation, and the first application component is displayed based on the first data, so that the first application component is displayed as soon as possible when dependency on the target application is reduced. This improves efficiency and reliability of displaying the first application component. Alternatively, the second data may continue to be obtained from the target application. The second data may indicate more details of the first application component than the first data, or the second data may be newer than the first data. In this way, the displayed first application component is updated based on the second data, so that the displayed first application component may include richer details or newer information. This ensures quality and accuracy of the first application component.

In some implementations, before the obtaining second data from a target application corresponding to the first application component, the method includes: starting the target application.

In some implementations, the method further includes: updating the first data in the persistent storage area based on the second data. Updated new first data includes more or newer information, so that, in response to the first operation next time, the first application component can be displayed based on the new first data. This helps improve quality and accuracy of displaying the first application component in response to the first operation.

In some implementations, the first operation is a power-on operation or a restart operation, so that in a case of power-on or restart, efficiency of obtaining the first data is increased, efficiency of displaying the first application component is increased, dependency on the target application for displaying of the first application component is reduced, reliability of displaying the first application component is improved, and a problem that a user sees a blank first application component or the first application component cannot be displayed when the electronic device is powered on or restarted is resolved. In some implementations, the first operation is an operation of switching a host application of the first application component from the background to the foreground, so that when the host application is switched from the background to the foreground, efficiency of obtaining the first data is increased, efficiency of displaying the first application component is increased, dependency on the target application for displaying of the first application component is reduced, reliability of displaying the first application component is improved, and a problem that a user sees a blank first application component or the first application component cannot be displayed when the first application component is switched from the background to the foreground is resolved.

In some implementations, a manner of displaying the first application component may be determined based on a type of the first operation.

In some implementations, if the first operation is a power-on operation or a restart operation, and the first data is first obtained, the first application component is first displayed based on the first data, and then the displayed first application component is updated based on the obtained second data; if the first operation is a power-on operation or a restart operation, and the second data is first obtained, the first application component is directly displayed based on the second data; or if the first operation is an operation of switching the host application from the background to the foreground, the first application component may always be first displayed based on the first data, and then the displayed first application component is updated based on the second data.

Alternatively, in some other implementations, if the first operation is an operation of switching the host application from the background to the foreground, and the first data is first obtained, the first application component is first displayed based on the first data, and then the displayed first application component is updated based on the obtained second data; if the first operation is an operation of switching the host application from the background to the foreground, and the second data is first obtained, the first application component is directly displayed based on the second data; or if the first operation is a power-on operation or a restart operation, the first application component may be always displayed first based on the first data, and then the displayed first application component is updated based on the second data.

In some implementations, the method further includes: if the host application of the first application component is switched from the foreground to the background, deleting third data from a buffer, where the third data is used to display some or all application components belonging to the host application, and the some or all application components include the first application component.

The host application in the foreground may be switched to the background, and the third data may be deleted from the buffer. The third data is used to display the some or all application components belonging to the host application, and a buffer occupied by the host application and the some or all application components belonging to the host application is reduced. In this way, more application components can be created when a buffer of a same size is occupied, or fewer buffers can be occupied when the same quantity of application components is created.

In some implementations, the third data may include at least one of fourth data that is of the some or all application components and that is read from the persistent storage area and intermediate data generated based on the fourth data. In some implementations, the fourth data may be data obtained from target applications of the some or all application components. In some implementations, the third data includes views of the some or all application components belonging to the host application.

In some implementations, the third data may be used to display the first application component. In some implementations, the third data may include data other than a screenshot of the first application component in the first data. In some implementations, the third data may include data other than the screenshot of the first application component in the second data. In some implementations, the third data may include intermediate data that is generated based on the first data or the second data and that is used to display the first application component, for example, a view.

Because the first data or the second data may be stored in the persistent storage area, even if the third data is deleted from the buffer when the host application is switched to the background, the third data may be generated again based on the first data or the second data when the first application component is switched to the foreground again, further, the first application component is displayed. However, for another application component belonging to the host application, before the host application is switched to the background, data corresponding to the another application component may not be persistently stored. In this case, to ensure that the another application component can be quickly and reliably displayed when the host application is switched to the foreground again, the data corresponding to the another application component may not be deleted from the buffer.

In some implementations, the deleting third data from a buffer includes: deleting the third data from the buffer if a first condition is met, where the first condition includes at least one of the following: duration starting when the host application is switched to the background is greater than or equal to first duration; a quantity of application components belonging to the host application is greater than or equal to a first quantity; duration starting when the third data is previously deleted from the buffer is greater than or equal to second duration.

In other words, a frequency of deleting the third data from the buffer may be adjusted based on the first condition, so that when foreground/background switching is frequently performed on the first application component, the buffer does not need to be frequently read and written or the first application component does not need to be rendered, the first application component can be displayed more quickly, and smoother switching effect of the first application component is provided.

When the first condition includes that the duration starting when the host application is switched to the background is greater than or equal to the first duration, longer first duration indicates longer duration starting when the third data is retained in the buffer, so that the host application is switched to the foreground within longer duration starting when the host application is switched to the background, smoother application component switching effect can be provided.

When the first condition includes that the quantity of application components belonging to the host application is greater than or equal to the first quantity, and the quantity of application components belonging to the host application is large (that is, greater than or equal to the first quantity), the third data may be deleted from the buffer in time, to save more buffers; or when the quantity of application components belonging to the host application is small (that is, less than the first quantity), the third data in the buffer is retained, so that when the application component is switched to the foreground again, smoother application component switching effect can be provided.

When the first condition includes that the duration starting when the third data is previously deleted from the buffer is greater than or equal to the second duration, a smaller second duration indicates a higher frequency of deleting the third data from the buffer and stronger buffer saving effect; and a larger second duration indicates a lower frequency of deleting the third data from the buffer, so that when the application component is switched from the background to the foreground for a plurality of times, smoother application component switching effect can be provided.

In some implementations, the first duration may be 1 minute, the first quantity may be 7, and the second duration may be 3 minutes.

In some implementations, a view of the first application component may be obtained through rendering based on the first data, and the view is displayed on a display.

In some implementations, the first data includes at least one of text data corresponding to the first application component, image data corresponding to the first application component, configuration data corresponding to the text data, and configuration data corresponding to the image data. The text data and the image data may be arranged based on the structure data corresponding to the first application component (for example, positions and rotation angles of the text data, the image data, and the like in the first application component are determined), the text data is loaded based on the configuration data corresponding to the text data, and the image data is loaded based on the configuration data corresponding to the image data, to generate the view.

In some implementations, the configuration data corresponding to the text data may indicate an attribute of the text data, for example, an attribute like a font, a font size, a color, and a background. In some implementations, the configuration data may be represented by using a JavaScript object notation (JavaScript object notation, JSON) character string.

In some implementations, the configuration data corresponding to the image data may indicate an attribute of the image data, for example, an attribute like an image name, an image size, or an image storage position. In some implementations, the configuration data may be represented by an array.

In some implementations, the data corresponding to the application component may include structure data, and the structure data may be used to organize and manage other data corresponding to the application component.

In some implementations, the view may be stored in the buffer.

In some implementations, the first data includes a screenshot of the first application component, and the screenshot may be the same as or similar to a view of the first application component obtained through rendering. Therefore, the screenshot may be displayed, to achieve visual effect the same as or similar to that of displaying the view of the first application component.

In some implementations, the persistent storage area includes a device encrypted storage area; and the obtaining first data from a persistent storage area includes: before an electronic device on which the first application component is located is unlocked, obtaining the first data from the device encrypted storage area.

The persistent storage area may include a device encrypted storage area, so that the first data can be obtained from the device encrypted storage area before the electronic device is unlocked. The first data is obtained in advance, so that the first application component can be displayed more quickly after the electronic device is unlocked, and efficiency of displaying the first application component and user experience are improved. For example, after the electronic device is powered on or restarted, and before the electronic device is unlocked, the electronic device may obtain the first data from the device encrypted storage area, and render the view of the first application component, so that when the electronic device is unlocked, the first application component can be displayed when host applications such as the home screen and the leftmost screen are immediately displayed.

In some implementations, to ensure security of the host application, the persistent storage area can be accessed only by the host application, and the persistent storage area may be referred to as a sandbox of the host application.

According to a second aspect, an embodiment of this application provides an apparatus for displaying an application component, including:
an obtaining module, configured to obtain first data from a persistent storage area in response to a first operation, where the first operation is used to trigger displaying of a first application component, and the first data includes at least a part of data corresponding to the first application component; and
a display module, configured to display the first application component based on the first data.

In some implementations, the obtaining module is further configured to obtain second data from a target application corresponding to the first application component, where the second data includes at least a part of data corresponding to the first application component; and
the display module is further configured to update the displayed first application component based on the second data.

In some implementations, the apparatus further includes:
an update module, configured to update the first data in the persistent storage area based on the second data.

In some implementations, the apparatus further includes:
a deletion module, configured to: if a host application of the first application component is switched from a foreground to a background, delete third data from a buffer, where the third data is used to display some or all application components belonging to the host application, and the some or all application components include the first application component.

According to a third aspect, an embodiment of this application provides an electronic device, including a memory and a processor. The memory is configured to store a computer program; and the processor is configured to perform the method according to any implementation of the first aspect when invoking the computer program.

According to a fourth aspect, an embodiment of this application provides a chip system. The chip system includes a processor, the processor is coupled to a memory, and the processor executes a computer program stored in the memory, to implement the method according to any implementation of the first aspect.

The chip system may be a single chip or a chip module including a plurality of chips.

According to a fifth aspect, an embodiment of this application provides a computer-readable storage medium. The computer-readable storage medium stores a computer program, and when the computer program is executed by a processor, the method according to any implementation of the first aspect is implemented.

According to a sixth aspect, an embodiment of this application provides a computer program product. When the computer program product runs on an electronic device, the electronic device is enabled to perform the method according to any implementation of the first aspect.

It may be understood that, for beneficial effect of the second aspect to the sixth aspect, refer to related descriptions in the first aspect. Details are not described herein.

### BRIEF DESCRIPTION OF DRAWINGS

FIG. 1 is a diagram of a structure of an electronic device according to an embodiment of this application;
FIG. 2 is a diagram of a display interface according to an embodiment of this application;
FIG. 3 is a diagram of another display interface according to an embodiment of this application;
FIG. 4 is a diagram of a structure of an application component system according to an embodiment of this application;
FIG. 5 is a diagram of an application component according to an embodiment of this application;
FIG. 6 is a flowchart of a method for displaying an application component according to an embodiment of this application;
FIG. 7 is a flowchart of another method for displaying an application component according to an embodiment of this application;
FIG. 8 is a flowchart of a method for displaying an application component according to an embodiment of this application;
FIG. 9 is a diagram of another application component according to an embodiment of this application;
FIG. 10 is a flowchart of another method for displaying an application component according to an embodiment of this application;
FIG. 11 is a flowchart of a method for switching an application component according to an embodiment of this application;
FIG. 12 is a flowchart of another method for displaying an application component according to an embodiment of this application; and
FIG. 13 is a diagram of a structure of an apparatus for displaying an application component according to an embodiment of this application.

### DESCRIPTION OF EMBODIMENTS

A method for displaying an application component provided in embodiments of this application may be applied to an electronic device like a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

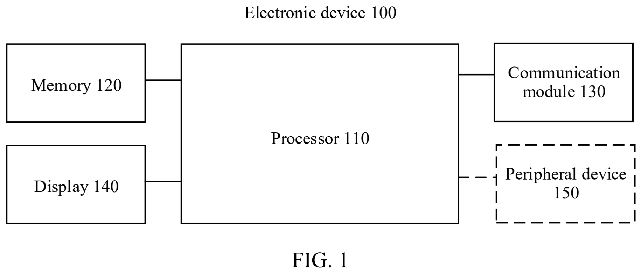

FIG. 1 is a diagram of a structure of an electronic device 100 according to an embodiment of this application. The electronic device 100 may include a processor 110, a memory 120, a communication module 130, a display 140, and the like.

The processor 110 may include one or more processing units. The memory 120 is configured to store program code and data. In this embodiment of this application, the processor 110 may execute computer-executable instructions stored in the memory 120, and the processor 110 is configured to control and manage an action of the electronic device 100.

In some implementations, the memory 120 may include a first memory and a second memory.

The first memory may include a buffer, and the buffer may be used to store temporary data. In some implementations, when the first memory is powered off, data stored in the buffer disappears. In some implementations, the buffer can perform high-speed data exchange. In some implementations, the buffer may directly exchange data with the processor 110 of the electronic device. In some implementations, the first memory may include a random access memory (random access memory, RAM) or a cache (CACHE).

The second memory may include a persistent storage area, and the persistent storage area may be configured to store persistent data. In some implementations, when the second memory is powered off, the data in the persistent storage area is still retained. In some implementations, the second memory may include a secure digital memory (secure digital memory, SD) card, a double data rate synchronous dynamic random access memory (double data rate, DDR), a flash memory (flash memory, FLASH), and an embedded multi media card (embedded multi media card, eMMC), electrically erasable programmable read-only memory (electrically erasable programmable read-only memory, EEPROM). In some implementations, a persistent storage area may include a device encrypted storage (device encrypted storage) area. Before the electronic device is unlocked, data in the device encrypted storage area may be read, and data may be written into the device encrypted storage area. In some implementations, one application may correspond to one persistent storage area. The electronic device 100 may allocate the persistent storage area to the application when installing the application, and reclaim the persistent storage area when uninstalling the application. The persistent storage area can be accessed only by the application, the persistent storage area may also be referred to as a "sandbox" of the application.

In some implementations, the memory 120 may include a third memory, and the third memory includes a buffer and a persistent storage area.

In some implementations, the processor 110 may include an application processor (application processor, AP) and a graphics processing unit (graphics processing unit, GPU). The electronic device 100 may implement a display function through the GPU, the display 140, the application processor, and the like. The GPU is a microprocessor for image processing, and is connected to the display 140 and the application processor. The GPU is configured to: perform mathematical and geometric computation, and render an image. The processor 110 may include one or more GPUs, which execute program instructions to generate or change display information.

The display 140 is configured to display an image, a video, and the like. The display 140 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 140, where N is a positive integer greater than 1.

The communication module 130 may be configured to: perform communication between internal modules of the electronic device 100, or perform communication between the electronic device 100 and another external electronic device, or the like. For example, if the electronic device 100 communicates with another electronic device in a wired connection manner, the communication module 130 may include an interface, for example, a USB port, where the USB port may be an interface that complies with a USB standard specification, and may be specifically a mini USB port, a micro USB port, a USB Type C port, or the like. The USB port may be configured to connect to a charger to charge the electronic device 100, or may be configured to perform data transmission between the electronic device 100 and a peripheral device, or may be configured to connect to a headset for playing audio through the headset.

Alternatively, the communication module 130 may include an audio component, a radio frequency circuit, a Bluetooth chip, a wireless fidelity (wireless fidelity, Wi-Fi) chip, a near-field communication (near-field communication, NFC) module, and the like. The communication module 130 may perform interaction between the electronic device 100 and the another electronic device in a plurality of different manners.

Optionally, the electronic device 100 may further include a peripheral device 150, for example, a mouse, a keyboard, a loudspeaker, or a microphone.

It should be understood that, in addition to various components or modules shown in FIG. 1, the structure of the electronic device 100 is not specifically limited in embodiments of this application. In some other embodiments of this application, the electronic device 100 may further include more or fewer components than those shown in the figure, or a combination of a part of the components, or splits from a part of the components, or an arrangement of different components. The components shown in the figure may be implemented by hardware, software, or a combination of software and hardware.

To facilitate understanding of the technical solutions in embodiments of this application, the following first describes an application scenario of embodiments of this application.

Various applications may be installed on an electronic device, and different applications may provide different services. This brings various experience to the user. However, as an increasing quantity of applications are installed on the electronic device and an increasing quantity of services are provided by each application, the user usually needs to perform a complex operation to start the target application or the target service. Therefore, to implement direct service access and reduce an experience level, the electronic device may display the application component. The application component may be used to carry related information of or a related operation on the target application. The user may directly view the information by using the application component or obtain a corresponding service by using the operation.

In some implementations, the application component may include a service card (referred to as a card for short) or a widget (or referred to as a small component). It may be understood that, during actual application, the application component may include more or fewer software modules or units that can carry related information of or related operations on the target application, or the application component may have another name, for example, a magnetic sticker or a business card.

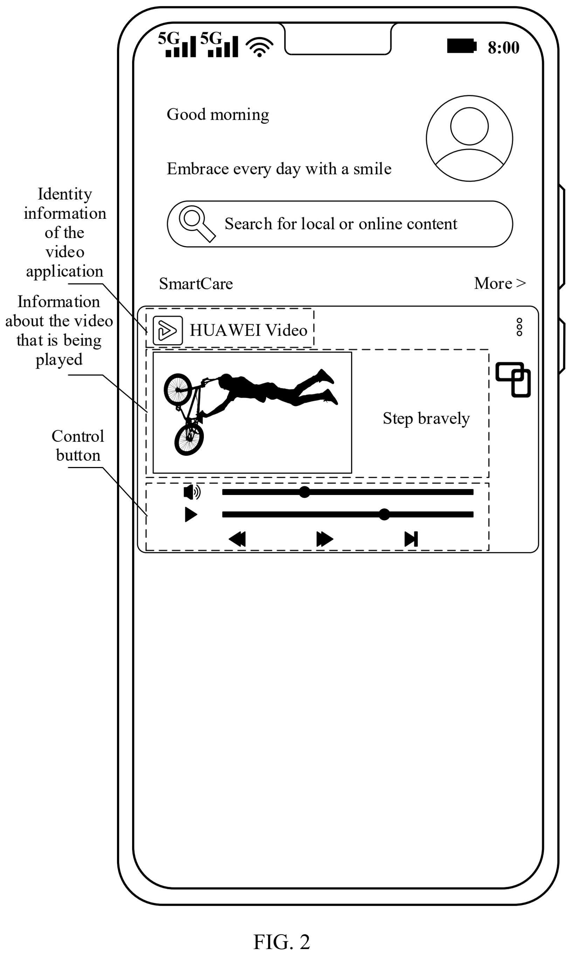

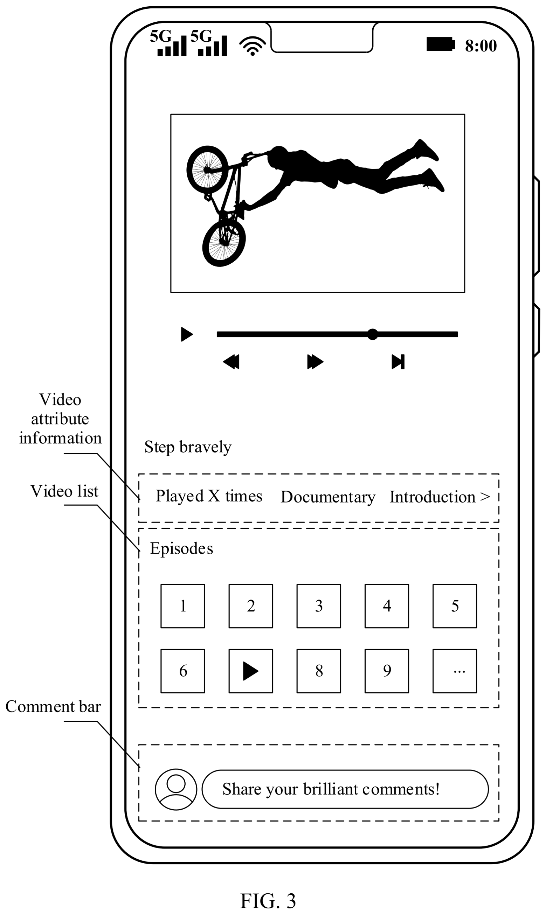

The following specifically describes the application component with reference to a scenario in which a video widget (which may also be referred to as a video component) is displayed. FIG. 2 and FIG. 3 are diagrams of a display interface according to an embodiment of this application.

FIG. 2 is a leftmost screen interface. A user may enter the leftmost screen interface by sliding the home screen of the electronic device rightward. In some implementations, the user may add a video widget from a leftmost screen application. For example, the user may tap a "More" button on the leftmost screen interface, the electronic device displays a widget adding option in response to an operation of tapping the "More" button by the user, and the user may determine a video application as a target application based on the widget adding option, in this way, the video widget is added to the leftmost screen interface. In some implementations, the user may touch and hold an icon of the video application on the home screen. The electronic device displays the widget adding option in response to an operation of touching and holding the icon of the video application by the user. The user may add the video widget to the leftmost screen interface based on the widget adding option. It may be understood that, during actual application, the video widget may alternatively be added to the leftmost screen interface in another manner.

As shown in FIG. 2, the leftmost screen interface includes a "HUAWEI Video" widget, and the "HUAWEI Video" widget includes identity information of the video application, information about a video that is being played, and a plurality of control buttons. The identity information of the video application may indicate an identity of the target application. In some implementations, the identity information may include an icon of the video application and a name of the video application. The information about the video that is being played may indicate information related to the currently played video. In some implementations, the video information may include a video window and a video name. The control button may be used to control a video playing process. In some implementations, the control button may include a volume bar, a video progress bar, a fast-forward button, a rewind button, a next video button, and the like.

When the electronic device displays the leftmost screen interface shown in FIG. 2, the user may see the video widget, and determine, based on the identity information of the video application, that content in the video widget is from the video application. It is determined, based on the information about the video that is being played, that a currently played video image and a video name are "Step bravely". The user may further control a video process based on the control button, for example, adjust a volume by dragging a volume bar, or adjust a playing progress by dragging a video progress bar.

In some implementations, the user may tap a blank position in the video widget, and the electronic device may start the video application in response to the tap operation performed by the user on the blank position, and directly jump to the video playing interface shown in FIG. 3. In some implementations, the video playing interface may include more information than the video widget. For example, in FIG. 3, the video playing interface may further include video attribute information, a video list, and a comment bar. The video attribute information may include information such as a quantity of playing times, a video type, and a video introduction. The video list may include more playable videos, so that the user selects one of the more playable videos for playing. The comment bar may be used to receive a comment of the user on the video that is currently being played.

In addition, the user may alternatively tap an icon of the video application on the home screen, and the electronic device may start the video application in response to the tap operation performed by the user on the icon, and display a main interface of the video application. The user continues to search the main interface for an option related to the video that is being played, to find the video playing interface shown in FIG. 3 layer by layer.

It can be learned that the video widget shown in FIG. 2 not only intuitively and conveniently displays a video that is being played and related information of the video to the user, but also displays a plurality of control buttons, so that the user can control a video playing process. In addition, the user may also directly access the video playing interface by using the video widget. This avoids a complex operation of searching for the video playing interface layer by layer.

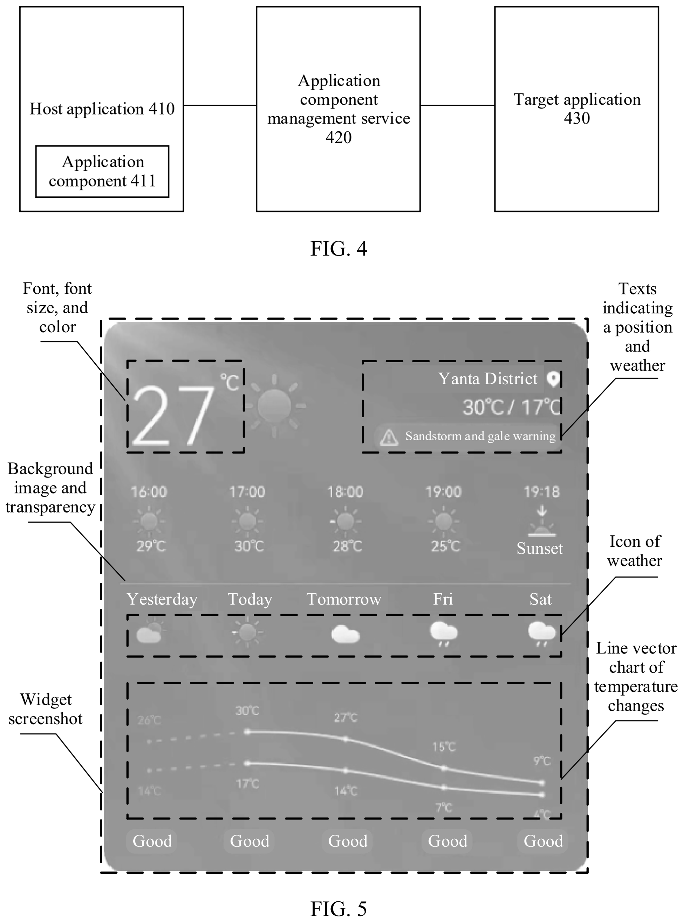

FIG. 4 is a diagram of a structure of an application component system according to an embodiment of this application. The system may include a host application 410, an application component management service 420, and a target application 430.

The host application 410 is an application component user. The host application 410 may obtain data corresponding to an application component 411 and display the application component 411. In some implementations, the host application 410 may control a position at which the application component 411 is displayed. In some implementations, the host application 410 may be used to add the application component 411, delete the application component 411, and request to update the application component 411. In some implementations, the host application 410 may include system applications such as a home screen application and a leftmost screen application. Certainly, it may be understood that, during actual application, the host application 410 may alternatively be another system application or a third-party application.

The application component management service 420 may manage the application component 411. In some implementations, the application component management service 420 may obtain the data corresponding to the application component 411 from the target application 430, and provide the data to the host application 410. In some implementations, the application component management service 420 may be used to implement communication between the host application 410 and the target application 420. In some implementations, the application component management service 420 may be implemented as a system service. In some implementations, the application component management service 420 may be omitted. In this case, the host application 410 and the target application 430 may directly communicate with each other, or the host application 410 and the target application 430 may communicate with each other by using other middleware. In some implementations, at least a part of functions of the application component management service 420 may be integrated in the host application 410 or the target application 430.

The target application 430 is an application component provider. The target application 430 may provide the data corresponding to the application component 411 to the host application 410. In some implementations, the target application 430 may request the host application 410 to create the application component 411, delete the application component 411, or indicate the host application 410 to update the application component 411. For example, the target application 430 may be the foregoing video application, and the application component 411 may be the foregoing video application component.

Data corresponding to an application component may be used to display the application component. The following specifically describes the data corresponding to the application component with reference to a weather widget (which may also be referred to as a weather component) shown in FIG. 5.

In some implementations, the data corresponding to the application component may include text data. For example, in the weather widget shown in FIG. 5, text data corresponding to the weather widget may include "27°C", "Yanta District", "Sandstorm and gale warning", "30°C/17°C", "16:00", "16:00", "17:00", "18:00", "19:00", "19:18", "29°C", "30°C", "28°C", "25°C", "Sunset", "Yesterday", "Today", "Tomorrow", "Fri", "Sat", "Good", and "Slight".

In some implementations, the data corresponding to the application component may include configuration data corresponding to text data, and the configuration data may indicate an attribute of the text data, for example, an attribute like a font, a font size, a color, and a background. In some implementations, the configuration data may be represented by a JSON character string. Certainly, during actual application, the configuration data may alternatively be represented by another type of data structure.

In some implementations, the data corresponding to the application component may include image data. For example, in the weather widget shown in FIG. 5, image data corresponding to the weather widget may include a background image of the weather widget, an icon indicating sunset/sunny/cloudy/light rain/moderate rain, a line vector chart indicating temperature changes, and a screenshot of the weather widget shown in FIG. 5.

In some implementations, the data corresponding to the application component may include configuration data corresponding to image data, and the configuration data may indicate an attribute of the image data, for example, an attribute like an image name, an image size, or an image storage position. In some implementations, the configuration data may be represented by an array. Certainly, during actual application, the configuration data may alternatively be represented by another type of data structure.

In some implementations, the data corresponding to the application component may include structure data, and the structure data may be used to organize and manage other data corresponding to the application component. In some implementations, the structure data may include one or more of a layout object, an application component object, an auxiliary class object, a mapping relationship, a callback function, and a context (Context) container object.

The following describes a method for displaying an application component with reference to a scenario in which a weather widget is displayed. Still refer to FIG. 4 and FIG. 5. When the host application 410 displays the weather widget, the host application 410 may start the target application 430 through the application component management service 420. The target application 430 may be a weather application. The target application 430 may send, to the host application 410 through the application component management service 420, data corresponding to the weather widget, including the foregoing text data, image data, configuration data corresponding to the text data, configuration data corresponding to the image data, structure data, and the like. The host application 410 stores the received data in a buffer, and generates a view (view) shown in FIG. 5 through rendering based on the received data. The host application 410 displays the view on a display of an electronic device, to present the weather widget to a user. A process of displaying the application component depends on the target application 430 to a large extent. If the host application 410 cannot start the target application 430, the application component cannot be displayed in time. For example, when the electronic device is powered on or restarted, the electronic device needs to be unlocked before starting the target application. Consequently, the electronic device cannot display the application component within a period of time after the electronic device is unlocked, and user experience is poor. In addition, if a large quantity of application components is added, the host application 410 occupies a very large amount of memory, which affects performance of the electronic device.

To resolve at least a part of the foregoing technical problems, an embodiment of this application provides another method for displaying an application component.

Specific embodiments are used below to describe in detail the technical solutions of this application. The following several specific embodiments may be combined with each other, and a same or similar concept or process may not be described repeatedly in some embodiments. The method shown in this embodiment of this application may be applied to the foregoing electronic device, and may be specifically applied to the host application of the electronic device.

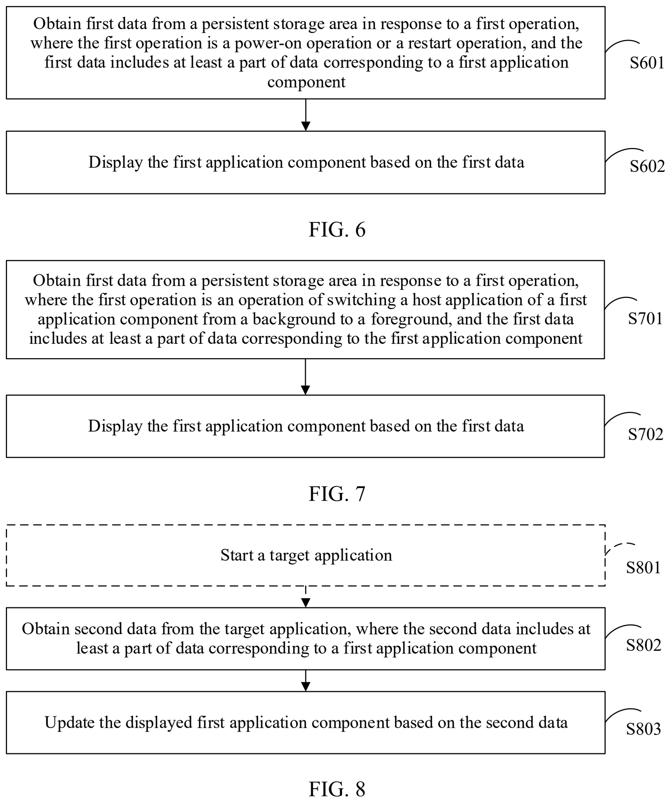

FIG. 6 is a flowchart of a method for displaying an application component according to an embodiment of this application. According to the method, the application component can be displayed as soon as possible when the electronic device is powered on or restarted. It should be noted that the method is not limited to a specific sequence described in FIG. 6 and the following descriptions. It should be understood that, in another embodiment, sequences of some steps in the method may be mutually exchanged based on an actual requirement, or some steps in the method may be omitted or deleted. The method includes the following steps.

S601: Obtain first data from a persistent storage area in response to a first operation, where the first operation is a power-on operation or a restart operation, and the first data includes at least a part of data corresponding to a first application component.

The first operation may be used to trigger displaying of the first application component. In addition, it should be noted that the first application component may be any application component belonging to any host application.

In some implementations, the first data may include at least one of text data corresponding to the first application component, image data corresponding to the first application component, configuration data corresponding to the text data, configuration data corresponding to the image data, and structure data corresponding to the first application component.

The weather widget shown in FIG. 5 is used as an example.

The text data corresponding to the weather widget may include "27°C", "Yanta District", "Sandstorm and gale warning", "30°C/17°C", "16:00", "16:00", "17:00", "18:00", "19:00", "19:18", "29°C", "30°C", "28°C", "25°C", "Sunset", "Yesterday", "Today", "Tomorrow", "Fri", "Sat", "Good", and "Slight".

The configuration data corresponding to the text data may include a font, a font size, and a color of each character.

The image data corresponding to the weather widget may include a background image of the weather widget, an icon indicating a cloudy day, an icon indicating a sunny day, an icon indicating a light rain, a line vector chart of temperature changes, and a screenshot of the widget shown in FIG. 5.

The configuration data corresponding to the image data may include a storage position, transparency, an image name, a size, and the like of each piece of image data.

The structure data corresponding to the weather widget may be used to organize and manage the text data, the image data, the configuration data corresponding to the text data, and the configuration data corresponding to the image data.

In some implementations, the persistent storage area may correspond to a host application, that is, the persistent storage area can be accessed only by the host application. In some implementations, the persistent storage area may be allocated to the host application when the host application is installed. Certainly, during actual application, the persistent storage area may alternatively be allocated to the host application in another manner.

In some implementations, the persistent storage area may include a device encrypted storage area, so that the first data can be obtained from the device encrypted storage area before the electronic device is unlocked. The first data is obtained in advance, so that the first application component can be displayed more quickly after the electronic device is unlocked, and efficiency of displaying the first application component and user experience are improved.

In some implementations, the persistent storage area may alternatively not correspond to the host application, or the persistent storage area can be accessed by an application other than the host application. For example, the persistent storage area may be a shared storage area between a host application of the first application component and a target application, the target application may store the data corresponding to the first application component in the shared storage area, and the host application may obtain the data from the shared storage area.

In some implementations, the first data may be obtained from the persistent storage area, and the first data is stored in a buffer. This helps subsequently continue to process the first data.

In some implementations, the first data may be obtained from the target application in advance, and the first data is stored in the persistent storage area. In some implementations, the target application may be requested to add the first application component, the first data returned by the target application is obtained, and the first data is stored in the persistent storage area. In some implementations, updated data sent by the target application may be obtained, and the first data included in the updated data is stored in the persistent storage area. Certainly, during actual application, the first data may alternatively be obtained from the target application on another occasion in another manner.

It should be noted that a form in which the first data is stored in the persistent storage area may include a text document, an extensible markup language (extensible markup language, XML), an image graphic, a data table, JSON, comma-separated values (comma-separated values, CSV), a database, a non-format file, or the like. A specific form in which the first data is stored in the persistent storage area is not limited in embodiments of this application.

S602: Display the first application component based on the first data.

When the first data is obtained, the first application component may be displayed based on the first data. The first data may be directly obtained from the persistent storage area, and there is no need to wait for the target application to provide the first data. Therefore, efficiency of obtaining the first data is increased, efficiency of displaying the first application component is increased, dependency on the target application for displaying of the first application component is reduced, and reliability of displaying the first application component is improved.

In some implementations, duration of waiting for the target application to provide the first data includes duration of communication between the host application and the target application to obtain the first data. In some implementations, the duration of waiting for the target application to provide the first data may further include duration of starting the target application.

In some implementations, a view of the first application component may be obtained through rendering based on the first data, and the view is displayed on a display. In some implementations, the text data and the image data may be arranged based on the structure data corresponding to the first application component (for example, positions and rotation angles of the text data and the image data in the first application component are determined), the text data is loaded based on the configuration data corresponding to the text data, and the image data is loaded based on the configuration data corresponding to the image data, to generate the view. In some implementations, the view may be stored in the buffer.

An example in which the weather widget shown in FIG. 5 is displayed is used as an example. The first data includes text data corresponding to the weather widget, image data, configuration data corresponding to the text data, configuration data corresponding to the image data, and structure data. Positions and rotation angles of text data like "27°C", "Yanta District", "Sandstorm and gale warning", "30°C/17°C", "16:00", "16:00", "17:00", "18:00", "19:00", "19:18", "29°C", "30°C", "28°C", "25°C", "Sunset", "Yesterday", "Today", "Tomorrow", "Fri", "Sat", "Good", and "Light", and positions and rotation angles of image data including a background image of the weather widget, an icon indicating a cloudy day, an icon indicating a sunny day, an icon indicating a light rain, and a line vector chart of temperature changes in the weather widget may be determined based on the structure data corresponding to the weather widget. A font, a size, and a font size of each piece of text data may be determined, and the font data is loaded based on the configuration data corresponding to the text data. The background image, the icon indicating the cloudy day, the icon indicating the sunny day, the icon indicating the light rain, and transparency of the line vector chart of temperature changes may be determined; and a background image, an icon indicating a cloudy day, an icon indicating a sunny day, an icon indicating a light rain, and a line vector chart of temperature changes are loaded based on the configuration data corresponding to the image data. In this way, the weather widget shown in FIG. 5 is displayed.

In some implementations, the first data does not include a part of data in the text data, the image data, the configuration data corresponding to the text data, the configuration data corresponding to the image data, and the structure data. Correspondingly, the part of data may be ignored or the part of data may be obtained in another manner. In some implementations, the part of data may be preset data, so that the part of data does not need to be obtained from the target application. In some implementations, the part of data may be obtained from the target application, that is, an amount of data obtained from the target application is reduced, and efficiency of displaying the first application component is increased.

In some implementations, the first data includes a screenshot of the first application component, and the screenshot may be the same as or similar to a view of the first application component obtained through rendering. Therefore, the screenshot may be displayed, to achieve visual effect the same as or similar to that of displaying the view of the first application component.

An example in which the weather widget shown in FIG. 5 is displayed is still used. The first data includes the screenshot of the weather widget shown in FIG. 5. Therefore, the screenshot may be directly displayed.

In some implementations, the first data may be stored in the buffer, and the view of the first application component is obtained through rendering in a buffer. In some implementations, the buffer may be used to store data used to display the first application component. In some implementations, the buffer may be used to store at least one of the first data and intermediate data that is generated based on the first data and that is used to display the first application component. In some implementations, the buffer may store the view of the first application component.

In this embodiment of this application, because the power-on operation and the restart operation may trigger displaying of the first application component, the first data is obtained from the persistent storage area in response to the power-on operation or the restart operation, where the first data includes at least a part of data corresponding to the first application component, so that the first application component may be displayed based on the first data. The first data is directly obtained from the persistent storage area, and there is no need to wait for the target application to provide the first data. Therefore, efficiency of obtaining the first data is increased, efficiency of displaying the first application component is increased, dependency on the target application for displaying of the first application component is reduced, reliability of displaying the first application component is improved, and a problem that a user sees a blank first application component or the first application component cannot be displayed when the electronic device is powered on or restarted is resolved.

FIG. 7 is a flowchart of a method for displaying an application component according to an embodiment of this application. According to the method, a first application component can be displayed as soon as possible when a host application of the first application component is switched from a background to a foreground. It should be noted that the method is not limited to a specific sequence described in FIG. 7 and the following descriptions. It should be understood that, in another embodiment, sequences of some steps in the method may be mutually exchanged based on an actual requirement, or some steps in the method may be omitted or deleted. The method includes the following steps.

S701: Obtain first data from a persistent storage area in response to a first operation, where the first operation is an operation of switching a host application of a first application component from a background to a foreground, and the first data includes at least a part of data corresponding to the first application component.

The first operation may be used to trigger displaying of the first application component.

In some implementations, an operation manner of the first operation may correspond to the host application. In some implementations, the host application is a home screen application, and the first operation may include an operation of returning to a home screen. In some implementations, the host application is a leftmost screen application, and the first operation may include an operation of invoking a leftmost screen.

S702: Display the first application component based on the first data.

It should be noted that, for a manner of performing S701 and S702, refer to the related descriptions in S601 and S602. Details are not described herein again.

In this embodiment of this application, because the operation of switching the host application of the first application component from the background to the foreground may trigger displaying of the first application component, the first data is obtained from the persistent storage area in response to the operation of switching the first application component from the background to the foreground, where the first data includes the at least a part of data corresponding to the first application component, so that the first application component may be displayed based on the first data. The first data is directly obtained from the persistent storage area, and there is no need to wait for a target application to provide the first data. Therefore, efficiency of obtaining the first data is increased, efficiency of displaying the first application component is increased, dependency on the target application for displaying of the first application component is reduced, reliability of displaying the first application component is improved, and a problem that a user sees a blank first application component or the first application component cannot be displayed when the first application component is switched from the background to the foreground is resolved.

FIG. 8 is a flowchart of a method for displaying an application component according to an embodiment of this application. The method may be applied after the methods shown in FIG. 6 and FIG. 7, to update a displayed first application component. It should be noted that the method is not limited to a specific sequence described in FIG. 8 and the following descriptions. It should be understood that, in another embodiment, sequences of some steps in the method may be mutually exchanged based on an actual requirement, or some steps in the method may be omitted or deleted. The method includes the following steps.

S801: Start a target application.

The target application is used to provide data corresponding to a first application component. For example, for the weather widget shown in FIG. 5, the target application may be a weather application.

In some implementations, the target application may be started through an application component management service. Certainly, during actual application, the target application may alternatively be started in another manner.

It should be noted that, when the target application is already in a started state, S801 may also be omitted.

S802: Obtain second data from the target application, where the second data includes at least a part of data corresponding to the first application component.

In some implementations, the second data may include at least one of text data corresponding to the first application component, image data corresponding to the first application component, configuration data corresponding to the text data, configuration data corresponding to the image data, and structure data corresponding to the first application component. In some implementations, the second data may include more data than first data, or the second data may be not completely the same as the first data.

The weather widget shown in FIG. 5 is used as an example. The weather widget shown in FIG. 5 is displayed based on the first data. If the first data indicates weather of a previous day, the second data may indicate weather of today. Alternatively, if the first data indicates weather at a previous moment, the second data may indicate weather at a current moment.

It should be noted that the obtaining the second data from the target application of the first application component may include directly obtaining the second data from the target application, or may include indirectly obtaining the second data from the target application.

In some implementations, the second data of the target application may be obtained by using middleware such as the application component management service. In some implementations, a host application may request the middleware such as the application component management service to send the second data to the host application at an interval of third duration. The third duration may be preset duration. In some implementations, when being switched to a foreground, the host application may send a first notification to the middleware such as the application component management service, where the first notification indicates that the host application is currently in the foreground and/or the first application component is visible, and the middleware such as the application component management service sends the second data to the host application in response to the first notification. When being switched to a background, the host application may send a second notification to the middleware such as the application component management service, where the second notification indicates that the host application is currently in the background and/or the first application component is invisible, and the middleware such as the application component management service stops sending the second data to the host application in response to the second notification. In some implementations, an update request may be sent to the application component management service, where the update request is used to request to obtain the second data from the target application, and the application component management service starts the target application, obtains the second data from the target application, and returns the second data.

For example, at a moment t1, the host application is switched to the background and sends the second notification to the application component management service, and at a moment t2, the host application is switched to the foreground and sends the first notification to the application component management service. If the application component management service receives, at a moment t3 between t1 and t2, the second data sent by the target application, the application component management service may store the second data, and send the second data to the host application after receiving the first notification at the moment t2. If the application component management service receives, at a moment t4 before the moment t1 or a moment t5 after the moment t2, the second data sent by the target application, the application component management service immediately sends the second data to the host application.

In some implementations, the host application may directly communicate with the target application, to directly obtain the second data from the target application.

S803: Update the displayed first application component based on the second data.

Because the second data is data obtained from the target application after the first application component is displayed based on the first data obtained from a persistent storage area, the second data may indicate more details than the first data, or the second data may be newer than the first data. In this way, the displayed first application component is updated based on the second data, so that the displayed first application component may include richer details or newer information.

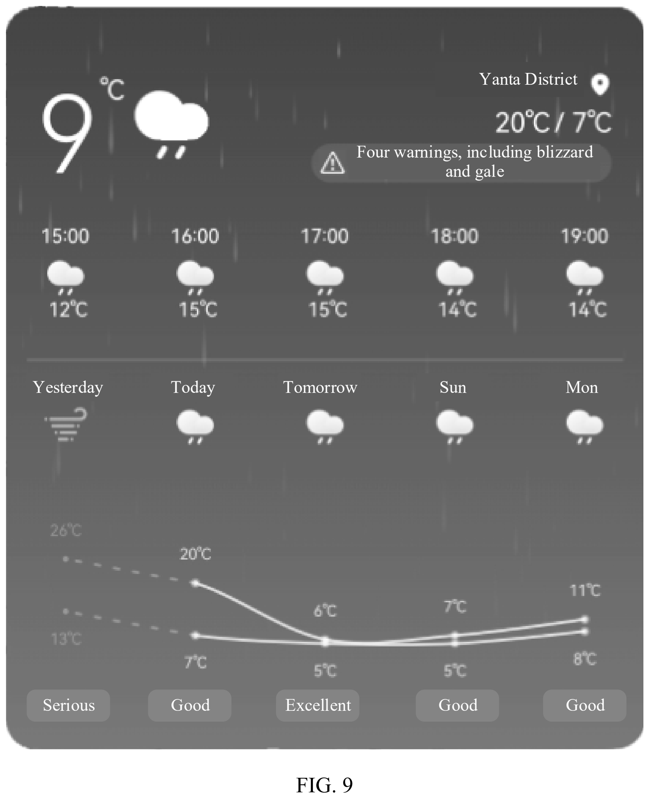

For example, during power-on, the weather widget shown in FIG. 5 may be first displayed on the home screen based on the first data in the persistent storage area. The weather widget shown in FIG. 5 may show the weather of the previous day. Therefore, the user can immediately see the weather widget instead of a blank widget during power-on. After the weather widget shown in FIG. 5 is displayed, the weather application may be started, the second data is obtained from the weather application, and the weather widget shown in FIG. 9 is displayed based on the second data. The weather widget shown in FIG. 9 may show the weather of the current day.

In some implementations, a view of the first application component may be updated based on the second data, and an updated view is displayed on the display.

It should be noted that a manner of obtaining the view of the first application component through rendering based on the second data may be the same as or similar to a manner of obtaining the view of the first application component through rendering based on the first data. Details are not described herein.

In some implementations, the second data may be stored in a buffer, and the view of the first application component is obtained through rendering in the buffer. In some implementations, the buffer may be used to store at least one of the second data and intermediate data that is generated based on the second data and that is used to display the first application component. In some implementations, the buffer may store an updated view of the first application component.

In some implementations, the first data in the persistent storage area may be updated based on the second data, and new first data obtained through updating includes more or newer information, so that, in response to the first operation next time, the first application component may be displayed based on the new first data. This helps improve quality and accuracy of displaying the first application component in response to the first operation.

In some implementations, the first data may be deleted, and then the second data is stored as new first data. In some implementations, the first data may be retained, and the second data is stored as new first data. Certainly, during actual application, the first data in the persistent storage area may be updated based on the second data in another manner.

In some implementations, the second data may be obtained from the target application at any moment, and then the first data in persistent storage area may be updated based on the second data.

In this embodiment of this application, because the first operation may trigger displaying of the first application component, the first data may be obtained from the persistent storage area in response to the first operation, and the first application component is displayed based on the first data, so that the first application component is displayed as soon as possible when dependency on the target application is reduced. This improves efficiency and reliability of displaying the first application component. Alternatively, the second data may continue to be obtained from the target application. The second data may indicate more details of the first application component than the first data, or the second data may be newer than the first data. In this way, the displayed first application component is updated based on the second data, so that the displayed first application component may include richer details or newer information. This ensures quality and accuracy of the first application component.

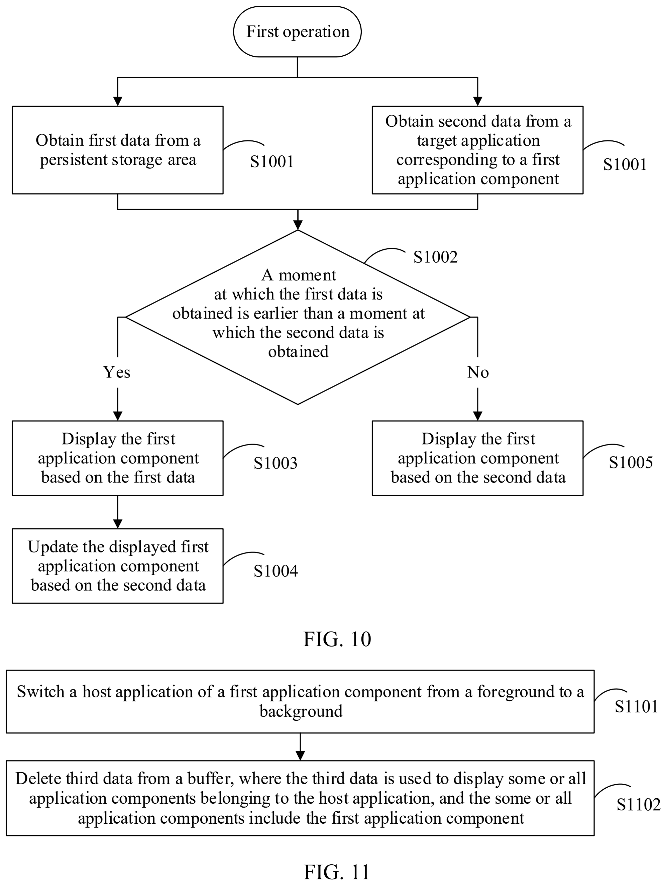

FIG. 10 is a flowchart of a method for displaying an application component according to an embodiment of this application. The method may be obtained by combining the methods shown in FIG. 6 to FIG. 8, so that when the first data is obtained earlier, the first application component is first displayed based on the first data, and then the displayed first application component is updated based on the second data, when the second data is obtained earlier, a widget is directly displayed based on the second data. It should be noted that the method is not limited to a specific sequence described in FIG. 10 and the following descriptions. It should be understood that, in another embodiment, sequences of some steps in the method may be mutually exchanged based on an actual requirement, or some steps in the method may be omitted or deleted. The method includes the following steps.

S1001: In response to a first operation, obtain first data from a persistent storage area, and obtain second data from a target application corresponding to a first application component.

In some implementations, the first data may be first obtained from the persistent storage area, and then the second data is obtained from the target application corresponding to the first application component, so that the first data is obtained earlier, to further reduce a delay of displaying the first application component in response to the first operation. It may be understood that, during actual application, the second data may be first obtained from the target application corresponding to the first application component, and then the first data is obtained from the persistent storage area. Alternatively, the first data may be obtained from the persistent storage area, and the second data may be obtained from the target application corresponding to the first application component.

It should be noted that, for a manner of obtaining the first data from the persistent storage area in S1001, refer to related descriptions in S601. For a manner of obtaining the second data from the target application corresponding to the first application component, refer to related descriptions in S801 and S802.

S1002: If a moment at which the first data is obtained is earlier than a moment at which the second data is obtained, perform S1003; otherwise, perform S1005.

If the moment at which the first data is obtained is equal to or later than the moment at which the second data is obtained, S1005 may be performed.

S1003: Display the first application component based on the first data.

It should be noted that, for a manner of displaying the first application component based on the first data in S1003, refer to related descriptions in S602.

S1004: Update the displayed first application component based on the second data.

It should be noted that, for a manner of updating the displayed first application component based on the second data in S1004, refer to related descriptions in S803.

S1005: Display the first application component based on the second data.

It should be noted that a manner of displaying the first application component based on the second data in S1005 may be the same as or similar to the manner of displaying the first application component based on the first data in S601.

In this embodiment of this application, in response to the first operation, the first data is obtained from the persistent storage area, and the second data may also be obtained from the target application corresponding to the first application component. If the moment at which the first data is obtained is earlier than the moment at which the second data is obtained, the first application component may be first displayed based on the first data, then the second data continues to be obtained from the target application. In this way, the displayed first application component is updated based on the second data, so that the displayed first application component may include richer details or newer information. This ensures quality and accuracy of the first application component. If the moment at which the first data is obtained is equal to or later than the moment at which the second data is obtained, the first application component may be directly displayed based on the second data. In other words, efficiency of displaying the first application component that includes richer details or newer information can be increased, and user experience is further improved.

It may be understood that, alternatively, the first application component may be displayed in different manners without considering a sequence difference between an occasion at which the first data is obtained and an occasion at which the second data is obtained. In some implementations, the second data may be obtained from a target application corresponding to the first application component, where the second data includes at least a part of data corresponding to the first application component; and the displayed first application component is updated based on the second data.

A sequence relationship between an occasion for obtaining the first data from the persistent storage area and an occasion for obtaining the second data from the target application corresponding to the first application component may not be limited, and a sequence relationship between an occasion for obtaining the first data and an occasion for obtaining the second data is not limited either, therefore, regardless of whether the first data or the second data is first obtained, the first application component is first displayed based on the first data, and then the displayed first application component is updated based on the second data. The following describes three possible cases. Case 1: The first data is first obtained, that is, the first application component may be displayed based on the first data, and when the second data is obtained again, the displayed first application component is updated based on the second data. Case 2: When both the first data and the second data are obtained simultaneously, the application component is still displayed based on the first data, and then the displayed first application component is updated based on the second data. Case 3: The second data is first obtained, and in this case, the first application component may still not be displayed. Instead, when the first data is obtained, the first application component is first displayed based on the first data, and then the displayed first application component is updated based on the second data. It can be learned that, in the foregoing three cases, the first application component may be first displayed, and then the displayed first application component is updated, so that a manner of displaying the application component is neater and more consistent, and more consistent visual experience is brought to a user.

In some implementations, a manner of displaying the first application component may be determined based on a type of the first operation.

In some implementations, if the first operation is a power-on operation or a restart operation, and the first data is first obtained, the first application component is first displayed based on the first data, and then the displayed first application component is updated based on the obtained second data; if the first operation is a power-on operation or a restart operation, and the second data is first obtained, the first application component is directly displayed based on the second data; or if the first operation is an operation of switching the host application from a background to a foreground, the first application component may always be first displayed based on the first data, and then the displayed first application component is updated based on the second data.

Alternatively, in some other implementations, if the first operation is an operation of switching the host application from a background to a foreground, and the first data is first obtained, the first application component is first displayed based on the first data, and then the displayed first application component is updated based on the obtained second data; if the first operation is an operation of switching the host application from a background to a foreground, and the second data is first obtained, the first application component is directly displayed based on the second data; or if the first operation is a power-on operation or a restart operation, the first application component may be always displayed first based on the first data, and then the displayed first application component is updated based on the second data.

FIG. 11 is a flowchart of a method for switching an application component according to an embodiment of this application. The method may be applied after the method shown in FIG. 6, or may be applied before or after the method shown in FIG. 7, so that the host application of the first application component is switched between the foreground and the background, and a buffer occupied by the host application is released when the host application is switched to the background, thereby saving device resources. It should be noted that the method is not limited to a specific sequence described in FIG. 11 and the following descriptions. It should be understood that, in another embodiment, sequences of some steps in the method may be mutually exchanged based on an actual requirement, or some steps in the method may be omitted or deleted. The method includes the following steps.

S1101: Switch a host application of a first application component from a foreground to a background.

In some implementations, the host application of the first application component may be switched from the foreground to the background in response to a second operation. The second operation may be used to trigger switching of the first application component from the foreground to the background.

In some implementations, an operation manner of the second operation may correspond to the host application. In some implementations, the host application is a home screen application, and the second operation may include an operation of starting any application. In some implementations, the host application is a leftmost screen application, and the second operation may include an operation of exiting the leftmost screen.

S1102: Delete third data from a buffer, where the third data is used to display some or all application components belonging to the host application, and the some or all application components include the first application component.

Deleting the third data from the buffer may release a buffer occupied by the third data. This reduces a buffer occupied by the host application and at least some application components belonging to the host application. In this way, more application components can be created when a buffer of a same size is occupied, or fewer buffers can be occupied when the same quantity of application components is created.

In some implementations, the third data may include at least one of fourth data that is of the some or all application components and that is read from the persistent storage area and intermediate data generated based on the fourth data. In some implementations, the fourth data may be data obtained from target applications of the some or all application components. In some implementations, the third data includes views of the some or all application components belonging to the host application.

In some implementations, the third data may be used to display the first application component. In some implementations, the third data may include data other than a screenshot of the first application component in the first data. In some implementations, the third data may include data other than the screenshot of the first application component in the second data. In some implementations, the third data may include intermediate data that is generated based on the first data or the second data and that is used to display the first application component, for example, a view.

Because the first data or the second data may be stored in the persistent storage area, even if the third data is deleted from the buffer when the host application is switched to the background, the third data may be generated again based on the first data or the second data when the first application component is switched to the foreground again, further, the first application component is displayed. However, for another application component belonging to the host application, before the host application is switched to the background, data corresponding to the another application component may not be persistently stored. In this case, to ensure that the another application component can be quickly and reliably displayed when the host application is switched to the foreground again, the data corresponding to the another application component may not be deleted from the buffer.

The screenshot of the first application component may be an image obtained by taking a screenshot of the view when the view of the first application component is displayed. The screenshot may include same visual information as the view, provided that the screenshot is retained in the buffer, even if the data other than the screenshot in the first data is deleted from the buffer when the first application component is switched to the background, the screenshot may be displayed again when the first application component is switched to the foreground again, to achieve same visual effect as that of displaying the view of the first application component, that is, the first application component may be displayed.

In some implementations, whether the first condition is met may be determined. If the first condition is met, the third data is deleted from the buffer. Otherwise, the third data is not deleted from the buffer. In other words, a frequency of deleting the third data from the buffer may be adjusted based on the first condition, so that when foreground/background switching is frequently performed on the first application component, the buffer does not need to be frequently read and written or the first application component does not need to be rendered, the first application component can be displayed more quickly, and smoother switching effect of the first application component is provided.

In some implementations, the first condition may be preset. In some implementations, the first condition may be set by a user, a vendor of an electronic device, and a vendor of the host application. It may be understood that an occasion and a manner of setting the first condition are not limited in embodiments of this application.

In some implementations, the first condition may include at least one of the following: Duration starting when the host application is switched to the background is greater than or equal to first duration; and a quantity of application components belonging to the host application is greater than or equal to a first quantity; duration starting when the third data is previously deleted from the buffer is greater than or equal to second duration.

When the first condition includes that the duration starting when the host application is switched to the background is greater than or equal to the first duration, longer first duration indicates longer duration starting when the third data is retained in the buffer, so that the host application is switched to the foreground within longer duration starting when the host application is switched to the background, smoother application component switching effect can be provided.

When the first condition includes that the quantity of application components belonging to the host application is greater than or equal to the first quantity, and the quantity of application components belonging to the host application is large (that is, greater than or equal to the first quantity), the third data may be deleted from the buffer in time, to save more buffers; or when the quantity of application components belonging to the host application is small (that is, less than the first quantity), the third data in the buffer is retained, so that when the application component is switched to the foreground again, smoother application component switching effect can be provided.

When the first condition includes that the duration starting when the third data is previously deleted from the buffer is greater than or equal to the second duration, a smaller second duration indicates a higher frequency of deleting the third data from the buffer and stronger buffer saving effect; and a larger second duration indicates a lower frequency of deleting the third data from the buffer, so that when the application component is switched from the background to the foreground for a plurality of times, smoother application component switching effect can be provided.

In some implementations, the first duration, the first quantity, and the second duration may be preset. In some implementations, the first duration, the first quantity, and the second duration may be set by the user, the vendor of the electronic device, and the vendor of the host application. In some implementations, the first duration may be 1 minute, the first quantity may be 7, and the second duration may be 3 minutes. It may be understood that an occasion, a manner, and specific values for setting the first duration, the first quantity, and the second duration are not limited in embodiments of this application. For example, the first duration, the first quantity, and the second duration may alternatively be other values.

In this embodiment of this application, the host application in the foreground may be switched to the background, and the third data may be deleted from the buffer. The third data is used to display the some or all application components belonging to the host application, and a buffer occupied by the host application and the some or all application components belonging to the host application is reduced. In this way, more application components can be created when a buffer of a same size is occupied, or fewer buffers can be occupied when the same quantity of application components is created.

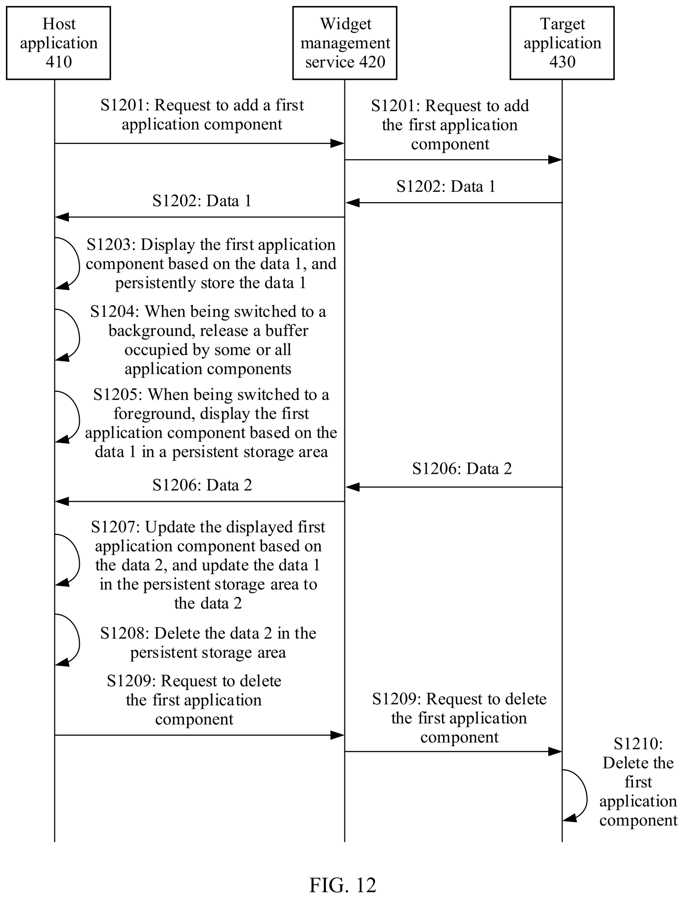

FIG. 12 is a flowchart of a method for displaying an application component according to an embodiment of this application. The method may be obtained by combining the methods shown in FIG. 6 to FIG. 8 and FIG. 11. It should be noted that the method is not limited to a specific sequence described in FIG. 12 and the following descriptions. It should be understood that, in another embodiment, sequences of some steps in the method may be mutually exchanged based on an actual requirement, or some steps in the method may be omitted or deleted. The method includes the following steps.

S1201: A host application 410 requests a target application 430 to add a first application component.

In some implementations, the host application 410 may request, through a first application component management service 420, the target application 430 to add the first application component.

S1202: The target application 430 returns data 1 to the host application 410.

The data 1 obtained by the host application 410 may be used as the foregoing second data.

S1203: The host application 410 displays the first application component based on the data 1, and persistently stores the data 1.

The data 1 in a persistent storage area may be used as the foregoing first data.

In some implementations, the host application 410 may store the data 1 in the persistent storage area corresponding to the host application 410.

In some implementations, the host application 410 may generate a view 1 of the first application component through rendering based on the obtained data 1, and then display the view 1. The view 1 generated through rendering may be stored in a buffer, and the view 1 may be used as the foregoing third data.

S1204: When the host application 410 is switched to a background, release a buffer occupied by views of some or all application components belonging to the host application 410.

Releasing the buffer occupied by the views of the some or all application components belonging to the host application 410 may include deleting a view of each application component from the buffer.

In some implementations, the views of the some or all application components may include the view 1.

S1205: When the host application 410 is switched to a foreground, display the first application component based on the data 1 in the persistent storage area.

In some implementations, the host application 410 may obtain the data 1 from the persistent storage area, generate the view 1 of the first application component through rendering again based on the data 1, and then display the view 1.

S1206: The target application 430 sends data 2 to the host application 410.

The data 2 may be used to update the displayed first application component. The data 2 may be used as the foregoing second data.

In some implementations, the host application 410 may start the target application 430, and request the target application 430 to update the first application component. The target application 430 returns the data 2 to the host application 410 in response to the request.

In some implementations, the target application 430 may send the data 2 to the host application 410 through the application component management service 420.

S1207: The host application 410 updates the displayed first application component based on the data 2, and updates the data 1 in the persistent storage area to the data 2.

The data 2 in the persistent storage area may be used as the foregoing first data.

In some implementations, the host application 410 may overwrite the data 1 in the persistent storage area. In some other implementations, the host application 410 may delete the data 1, and store the data 2.

S1208: The host application 410 deletes the data 2 in the persistent storage area.

S1209: The host application 410 requests the target application 430 to delete the first application component.

The host application 410 may delete the data 2 in the persistent storage area, and delete the first application component. Then, the host application 410 may request the target application 430 again to add the first application component. In addition, it may be understood that the host application 410 may first delete the data 2 in the persistent storage area and then delete the first application component, or may first delete the first application component and then delete the data 2 in the persistent storage area.

In some implementations, the host application 410 may request, through the application component management service 420, the target application 430 to delete the first application component.

S1210: The target application 430 deletes the first application component.

In the method shown in FIG. 12, in S1201 to S1203, the first application component is added to the host application 410, and the data corresponding to the first application component is persistently stored. In S1204 and S1205, foreground/background switching is performed on the host application 410. S1206 and S1207 are performed to update the data that corresponds to the first application component and that is persistently stored, and update the displayed first application component for the host application 410. S1208 to S1210 are performed to delete the data corresponding to the first application component and the first application component for the host application 410. It may be understood that at least one of S1201 to S 1209 may be omitted, a sequence of at least two of S1201 to S1209 may be changed, and at least one of S1201 to S1210 may be performed for a plurality of times.

For example, S1204 and S1205 may be performed for a plurality of times to implement a plurality of times of foreground/background switching of the first application component. S 1206 and S 1207 may be performed for a plurality of times to update data that corresponds to the first application component and that is in the persistent storage area, and/or update the displayed first application component for a plurality of times.

For another example, a sequence of performing S1204 and S1205 may be after a sequence of performing S1206 and S1207, that is, the data that corresponds to the first application component and that is in the persistent storage area is first updated and/or the displayed first application component is first updated, then, foreground/background switching is performed on the first application component.

For another example, S1206 and S1207 may be performed after S1204 is performed, so that when the first application component is switched to the background, the data that corresponds to the first application component and that is in the persistent storage area is updated, and S 1204 is performed after S1207 is performed, therefore, when the first application component is switched to the foreground, the first application component is displayed based on data that corresponds to the first application component and that is updated in the persistent storage area.

For another example, S1208 may be performed, but S1209 is not performed, that is, only the data that corresponds to the first application component and that is in the persistent storage area is deleted, but the first application component is retained. Then, when the first application component needs to be displayed herein: The host application 410 may obtain the data corresponding to the first application component from the target application 430 again.

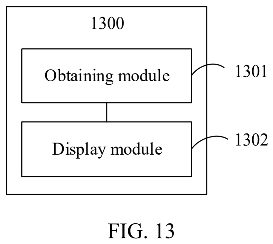

FIG. 13 is a diagram of a structure of an apparatus 1300 for displaying an application component according to an embodiment of this application. The apparatus 1300 includes an obtaining module 1301 and a display module 1302.

The obtaining module 1301 is configured to obtain first data from a persistent storage area in response to a first operation, where the first operation is used to trigger displaying of a first application component, and the first data includes at least a part of data corresponding to the first application component.

The display module 1302 is configured to display the first application component based on the first data.

In some implementations, the obtaining module 1301 is further configured to obtain, in response to the first operation, second data from a target application corresponding to the first application component, where the second data includes at least a part of data corresponding to the first application component; and
the display module 1302 is further configured to: if a moment at which the first data is obtained is earlier than a moment at which the second data is obtained, display the first application component based on the first data; and update the displayed first application component based on the second data; or if a moment at which the first data is obtained is equal to or later than a moment at which the second data is obtained, display the first application component based on the second data.

In some implementations, the obtaining module 1301 is further configured to obtain second data from a target application corresponding to the first application component, where the second data includes at least a part of data corresponding to the first application component; and the display module 1302 is further configured to update the displayed first application component based on the second data.

In some implementations, the apparatus 1300 is further configured to start the target application.

In some implementations, the apparatus 1300 further includes:
an update module, configured to update the first data in the persistent storage area based on the second data.

In some implementations, the apparatus 1300 further includes:
a deletion module, configured to: if a host application of the first application component is switched from a foreground to a background, delete third data from a buffer, where the third data is used to display some or all application components belonging to the host application, and the some or all application components include the first application component.

In some implementations, the deletion module is further configured to:
delete the third data from the buffer if a first condition is met, where the first condition includes at least one of the following:
duration starting when the host application is switched to the background is greater than or equal to first duration;
a quantity of application components belonging to the host application is greater than or equal to a first quantity;
duration starting when the third data is previously deleted from the buffer is greater than or equal to second duration.

In some implementations, the persistent storage area includes a device encrypted storage area.

The obtaining module 1301 is further configured to: before an electronic device on which the first application component is located is unlocked, obtain the first data from the device encrypted storage area.

The apparatus 1300 provided in this embodiment can perform the foregoing method embodiments, and implementation principles and technical effect of the apparatus are similar to those of the foregoing method embodiments. Details are not described herein.

Based on a same inventive idea, an embodiment of this application further provides an electronic device. The electronic device includes a memory and a processor. The memory is configured to store a computer program. The processor is configured to perform the methods in the foregoing method embodiments when invoking the computer program.

The electronic device provided in this embodiment may perform the foregoing method embodiment, and implementation principles and technical effect of the electronic device are similar to those of the foregoing method embodiments. Details are not described herein.

Based on a same inventive idea, an embodiment of this application further provides a chip system. The chip system includes a processor, the processor is coupled to a memory, and the processor executes a computer program stored in the memory, to implement the method in the foregoing method embodiment.

The chip system may be a single chip or a chip module including a plurality of chips.

An embodiment of this application further provides a computer-readable storage medium. The computer-readable storage medium stores a computer program. When the computer program is executed by a processor, the methods in the foregoing method embodiments are implemented.

An embodiment of this application further provides a computer program product. When the computer program product runs on an electronic device, the electronic device is enabled to perform the method in the foregoing method embodiments when executing the computer program product.

When the foregoing integrated unit is implemented in the form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code, and the computer program code may be in a source code form, an object code form, an executable file, an intermediate form, or the like. The computer-readable storage medium may include at least any entity or apparatus that can carry computer program code to a photographing apparatus/terminal device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disk.

In the foregoing embodiments, descriptions of embodiments have respective focuses. For a part that is not described in detail or recorded in an embodiment, refer to related descriptions in another embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/ device and method may be implemented in other manners. For example, the described apparatus/device embodiment is merely an example. For example, the division of the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

It should be understood that the term "include"/"comprise" when used in the specification of this application and the appended claims indicates the presence of the described features, wholes, steps, operations, elements, and/or components, but does not preclude the presence or addition of one or more other features, wholes, steps, operations, elements, components, and/or collections thereof.

It should also be understood that the term "and/or" as used in the specification of this application and the appended claims refers to any combination of one or more of associated items and all possible combinations, and includes such combinations.

As used in the specification of this application and the appended claims, the term "if" may be interpreted as "when" or "once" or "in response to determining" or "in response to detecting" depending on the context. Similarly, the phrase "if it is determined" or "if [described condition or event] is detected" may be interpreted, depending on the context, to mean "once determined" or "in response to determining" or "once [described condition or event] is detected" or "in response to detecting [described condition or event]".

In addition, in the descriptions of the specification of this application and the appended claims, the terms "first", "second", "third", and the like are merely used for distinguishing descriptions, but cannot be understood as indicating or implying relative importance.

Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Finally, it should be noted that the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or make equivalent replacements to some or all technical features thereof, without departing from the scope of the technical solutions of embodiments of this application.

## Claims

1. A method for displaying an application component, comprising:
obtaining first data from a persistent storage area in response to a first operation, wherein the first operation is used to trigger displaying of a first application component, and the first data comprises at least a part of data corresponding to the first application component; and
displaying the first application component based on the first data.

2. The method according to claim 1, wherein the method further comprises:
obtaining second data from a target application corresponding to the first application component, wherein the second data comprises at least a part of data corresponding to the first application component; and
updating the displayed first application component based on the second data.

3. The method according to claim 2, wherein the method further comprises:
updating the first data in the persistent storage area based on the second data.

4. The method according to any one of claims 1 to 3, wherein the first operation is a power-on operation or a restart operation, or the first operation is an operation of switching a host application of the first application component from a background to a foreground.

5. The method according to any one of claims 1 to 4, wherein the method further comprises:
if the host application of the first application component is switched from the foreground to the background, deleting third data from a buffer, wherein the third data is used to display some or all application components belonging to the host application, and the some or all application components comprise the first application component.

6. The method according to claim 5, wherein the third data comprises views of the some or all application components belonging to the host application.

7. The method according to claim 5 or 6, wherein the deleting third data from a buffer comprises:
deleting the third data from the buffer if a first condition is met, wherein the first condition comprises at least one of the following:
duration starting when the host application is switched to the background is greater than or equal to first duration;
a quantity of application components belonging to the host application is greater than or equal to a first quantity;
duration starting when the third data is previously deleted from the buffer is greater than or equal to second duration.

8. The method according to any one of claims 1 to 7, wherein the first data comprises at least one of text data corresponding to the first application component, image data corresponding to the first application component, configuration data corresponding to the text data, and configuration data corresponding to the image data.

9. The method according to any one of claims 1 to 8, wherein the persistent storage area comprises a device encrypted storage area; and the obtaining first data from a persistent storage area comprises:
before an electronic device on which the first application component is located is unlocked, obtaining the first data from the device encrypted storage area.

10. An apparatus for displaying an application component, comprising:
an obtaining module, configured to obtain first data from a persistent storage area in response to a first operation, wherein the first operation is used to trigger displaying of a first application component, and the first data comprises at least a part of data corresponding to the first application component; and
a display module, configured to display the first application component based on the first data.

11. The apparatus according to claim 10, wherein
the obtaining module is further configured to obtain second data from a target application corresponding to the first application component, wherein the second data comprises at least a part of data corresponding to the first application component; and
the display module is further configured to update the displayed first application component based on the second data.

12. The apparatus according to claim 11, wherein the apparatus further comprises:
an update module, configured to update the first data in the persistent storage area based on the second data.

13. The apparatus according to any one of claims 10 to 12, wherein the apparatus further comprises:
a deletion module, configured to: if a host application of the first application component is switched from a foreground to a background, delete third data from a buffer, wherein the third data is used to display some or all application components belonging to the host application, and the some or all application components comprise the first application component.

14. An electronic device, comprising a memory and a processor, wherein the memory is configured to store a computer program, and the processor is configured to perform the method according to any one of claims 1 to 9 when invoking the computer program.

15. A computer-readable storage medium, wherein the computer-readable storage medium stores a computer program, and when the computer program is executed by a processor, the method according to any one of claims 1 to 9 is implemented.

16. A computer program product, wherein when the computer program product runs on an electronic device, the electronic device is enabled to perform the method according to any one of claims 1 to 9.
